# FASCICULE DE BREVET EUROPEEN

(11) **EP 1 202 933 B1**
(45) Date de publication et mention de la délivrance du brevet: **15.12.2004**
(21) Numéro de dépôt: 00946049.4
(22) Date de dépôt: 03.07.2000
(51) Int. Cl.: C01G 49/00, H01F 1/11, G11B 5/706, H01F 1/36, H01F 1/34, C04B 35/26

(54) **PROCEDE DE FABRICATION DE POUDRES OU BISCUITS D'HEXAFERRITES DE TYPE M**
VERFAHREN ZUR HERSTELLUNG VON PULVERN ODER KUCHEN AUS HEXAFERRIT DES TYPE M
METHOD FOR MAKING M-TYPE HEXAFERRITE POWDERS OR WAFERS

(30) Priorité: 05.07.1999 FR 9908886; 04.08.1999 FR 9910295
(43) Date de publication de la demande: 08.05.2002
(73) Titulaire: UGIMAG S.A., F-38830 Saint-Pierre-d'Allevard (FR)
(72) Inventeur: MOREL, Antoine, F-27000 Evreux (FR); BRANDO, Eric, 78045 Laredo TX (US); TENAUD, Philippe, F-38190 Bernin (FR)
(74) Mandataire: Pigasse, Daniel
(86) Numéro de dépôt international: PCT/FR2000/001880
(87) Numéro de publication internationale: WO 2001/002300

(56) Documents cités:
- DE-A- 4 330 197
- US-A- 3 766 642

## Description

### DOMAINE DE L'INVENTION

L'invention concerne le domaine des poudres ou biscuits d'hexaferrites de type M, c'est-à-dire constitués de particules de magnétoplumbite de formule générale AFe₁₂O₁₉ où A désigne typiquement Ba, Sr, Ca, Pb, l'élément A et/ou Fe pouvant être partiellement substitués par d'autres éléments chimiques.

Ces poudres servent à fabriquer des aimants en céramique par compression avec orientation des particules sous champ magnétique, puis frittage de particules orientées et comprimées.

Ces poudres peuvent aussi servir à la fabrication de supports d'enregistrement magnétiques.

### ETAT DE LA TECHNIQUE

Le procédé habituel de fabrication de poudres de particules de ferrite est le suivant :
- on approvisionne les matières premières sous forme de poudres, typiquement l'oxyde de fer Fe₂O₃ et le carbonate de strontium SrCO₃ dans le cas où A est égal à Sr,
- on mélange les poudres avec un excès de Sr par rapport à la formule du ferrite, avec typiquement un rapport molaire Fe₂O₃ / SrO voisin de 5,5 au lieu de 6, rapport qui correspond à la formule de la phase M (Sr Fe₁₂ O₁₉), et éventuellement après avoir incorporé des additifs,
- on met en forme le mélange de poudre typiquement par granulation, ou compression de poudre,
- on forme le ferrite type M par calcination des granulés de poudre dans un four vers 1200°C, et après refroidissement, on obtient des granulés de ferrite ayant typiquement une densité apparente dₐ d'au moins 4, soit une porosité typiquement inférieure de 20% à celle d'un ferrite M de Sr de densité dₓ égale à 5.11.
- on broie les granulés calcinés en plusieurs étapes, avec un premier broyage grossier suivi d'un ou plusieurs broyages fins, comprenant une classification par taille particulaire. la poudre finale de ferrite obtenue devant être exempte d'agrégats grossiers constitués de particules primaires (particules élémentaires) même fines.

A noter que dans ce procédé, on utilise un excès de Sr qui conduit à la formation d'une seconde phase liquide, ce qui facilite la réaction de calcination et rend le procédé moins difficile à mettre en oeuvre. Mais dans ce cas, il faut aussi ajouter généralement de la silice pour limiter la croissance cristalline.

Ultérieurement, dans le cas de la fabrication d'aimants, la poudre fine obtenue est mise en forme, à la forme de l'aimant final, après mise en dispersion, avec orientation des particules primaires sous champ magnétique et compression.

Le produit comprimé est ensuite séché, fritté et éventuellement usiné aux dimensions.

### PROBLEMES POSES

Les performances finales ou propriétés magnétiques finales obtenues, typiquement la rémanence Br ou le champ coercitif HcJ, dépendent notamment directement de la morphologie des particules de ferrite, la rémanence Br dépendant notamment de la possibilité pour les particules primaires de s'orienter parallèlement, et le champ coercitif HcJ dépendant notamment de la taille et de la forme des particules.

Ainsi, la présence d'agrégats formé de particules primaires orientées aléatoirement est donc fortement néfaste à l'obtention de propriétés magnétiques élevées, les agrégats étant polycristallins et formés de particules orientées de façon incohérente.

La phase de broyage du procédé de l'état de la technique est donc une étape importante du procédé à la fois par sa durée, par son coût, y compris en investissements, et par ses conséquences sur les propriétés finales des aimants.

Les principaux problèmes associés à ce broyage sont les suivants :
- d'une part, comme les ferrites calcinés sont difficiles à broyer, on observe une usure importante du matériel de broyage et aussi une pollution du ferrite par des éléments étrangers issus des média de broyage. ce qui a des effets négatifs sur les propriétés magnétiques,
- d'autre part, comme les particules élémentaires sont très difficiles à séparer, l'étape de broyage final est très longue - ce qui a pour conséquence une proportion de fines élevées (particules de taille particulaire inférieure à 0,3 µm), aux effets négatifs, tant en ce qui concerne la mise en forme de la poudre de ferrite pour former des aimants, que la possibilité d'aligner sous champ magnétique ces particules de faibles dimensions, ou encore la possibilité de réagglomération des fines, la plus grande sensibilité à la recristallisation lors du frittage, etc...
   Les conséquences en sont une diminution des propriétés magnétiques finales, des valeurs de Br et HcJ et/ou de l'allure carrée de la courbe de démagnétisation.
   En outre, compte tenu de la difficulté de broyage du ferrite, il n'est plus possible à ce stade de modifier la taille et/ou la forme des particules élémentaires au cours de cette phase de broyage.
   La demanderesse a donc recherché une voie pour rendre à la fois plus économique et plus performant le procédé de fabrication habituellement utilisé, tout en restant proche de la technologie actuelle.

### DESCRIPTION DE L'INVENTION

Selon l'invention, le procédé de fabrication de poudres ou biscuits d'hexaferrites de type M, de formule A Fe₁₂ O₁₉, A et Fe pouvant être partiellement substitués, où A désigne un métal choisi parmi Ba, Sr, Ca, Pb, ou leur mélange dans lequel :
a) on approvisionne un oxyde de fer Fe₂O₃ et un composé de A, typiquement sous forme de poudres, et on fait un mélange dudit oxyde de fer et dudit composé de A, avec un rapport molaire n = Fe₂O₃/AO,
b) on met en forme ledit mélange sous forme d'agglomérats de forme et de taille adaptées à la phase de calcination, et on les calcine dans un four, typiquement entre 1100°C et 1300°C, de manière à former le ferrite de type M,
c) on broie lesdits agglomérats calcinés pour obtenir une poudre fine de ferrite, est caractérisé en ce que,
   - à l'étape a) antérieure à ladite calcination :
      1) on forme ledit mélange avec un rapport n compris entre 5,7 et 6,1,
      2) simultanément à la formation dudit mélange ou postérieurement à celle-ci, on broie ledit mélange, de manière à avoir à la fois un mélange présentant un degré d'homogénéité au moins égal à un seuil prédéterminé, et une taille particulaire moyenne de valeur prédéterminée comprise entre 0,25 et 1 µm,
      3) on introduit dans ledit mélange, avant ou pendant ledit broyage un agent contrôleur de la microstructure ou ACM en abrégé,
   - à l'étape b), les conditions de calcination ainsi que la nature et la teneur en ACM sont choisies pour obtenir, à l'issue de la phase de calcination, un matériau ferrite sous forme d'un biscuit poreux présentant simultanément le propriétés suivantes :
      * un rendement de transformation en ferrite M cristallisé supérieur à 95%,
      * une densité apparente dₐ inférieure à 3,5 , et, de préférence inférieure à 3, ou une porosité supérieure à 30% et de préférence supérieure à 40%,
      * une faible énergie de cohésion aux joints de grains entre particules primaires conduisant à une friabilité élevée, de manière à pouvoir remplacer, le broyage de l'étape c) par une simple désagglomération dudit biscuit.

L'invention se définit donc comme une combinaison de moyens essentiels.

Un premier moyen essentiel est un choix du rapport n très supérieur à la valeur (5,5) utilisée habituellement. Une valeur de n aussi basse est utilisée pour que se forme une 2^{ème} phase liquide avec le Sr en excès (dans le cas d'un ferrite Sr), cette formation de 2^{ème} phase liquide facilitant la réaction totale de formation du ferrite et sa cristallisation favorable à une bonne anisotropie, ce qui rend le procédé relativement facile à mettre en oeuvre à l'échelle industrielle. Mais, en contrepartie, cette 2^{ème} phase liquide a tendance à souder les particules primaires entre elles et à rendre difficile et long leur broyage ultérieur.

Le risque associé à une valeur de n supérieure à la valeur habituelle étant une réaction incomplète et une mauvaise cristallisation du ferrite.

Les moyens de l'invention permettent justement d'obtenir à la fois un rapport n proche de la stoechiométrie (n=6), c'est-à-dire de réduire au minimum la présence d'une 2^{ème} phase liquide, tout en obtenant à la fois un rendement de la transformation en ferrite élevé et une cristallisation suffisante pour avoir une anisotropie élevée pour les particules de ferrite obtenues.

Un second moyen est constitué par la formation d'un mélange de Fe₂O₃ et du composé de A avec un degré d'homogénéité prédéterminé et élevé, mélange le plus souvent associé au troisième moyen de broyage. En pratique, on effectue plusieurs prélèvements, typiquement 3, du mélange, généralement en cours de broyage, et l'on calcine ces prélèvements dans des conditions de laboratoire standard.

Un mélange est considéré comme satisfaisant quand on obtient un rendement en ferrite cristallisé déterminé dans ces conditions standards. Par exemple, il peut être établi par des essais qu'un échantillon conduisant à un rendement d'au moins 80% en ferrite cristallisé avec une calcination à 1125°C pendant 30 min, conduira à un rendement d'au moins 95% dans les conditions industrielles de calcination.

Le plus souvent, et surtout lorsque l'on souhaite obtenir un oxyde ferrique de faible taille particulaire (à 0,6 µm ou moins), le critère d'homogénéité selon l'invention est satisfait, durant le broyage, plus rapidement que celui relatif à la taille particulaire.

Un troisième moyen est constitué par le broyage dudit mélange pour que la taille particulaire moyenne des particules primaires aient une valeur prédéterminée, comprise entre 0,25 µm et 1 µm.

Il va de soi que, selon les grades, plus ou moins fins, des matières premières de départ, le travail de broyage sera plus ou moins long. Il peut être avantageux d'approvisionner un oxyde ferrique submicronique et de le broyer selon l'invention pour diminuer sa taille particulaire moyenne de quelques dixièmes de µm et atteindre ainsi la taille particulaire moyenne souhaitée..

Il importe en particulier que l'on obtienne en fin de broyage une distribution de taille particulaire qui soit unimodale et centrée sur la taille moyenne des particules primaires, et non bi-modale avec une population de particules primaires, et une autre population d'agrégats de particules primaires d'une taille typiquement de 5 à 10 fois supérieure à celle des particules primaires.

Ainsi le broyage tend à la fois à diminuer la taille des particules primaires jusqu'au niveau souhaité, et aussi à supprimer les agrégats de particules primaires.

Il importe qu'en fin de broyage, les deux critères, celui relatif au degré d'homogénéité de Fe₂O₃ et du composé de A, et celui relatif à la taille des particules de Fe₂O₃ et de composé de A, soient satisfaits.

Un quatrième moyen est constitué par l'introduction dans ledit mélange, avant ou pendant ledit broyage, d'un agent contrôleur de la microstructure ou ACM en abrégé.

Cet agent peut s'incorporer au réseau cristallin de ferrite durant la calcination, puis précipiter aux joints de grains, ce qui favorise la friabilité selon les observations de la demanderesse. Il peut se présenter aussi sous forme dispersée à la surface des particules ou cristaux de ferrite et ainsi s'opposer à la densification des particules de ferrite durant la calcination.

Ceci est donc aussi un moyen important pour obtenir un produit calciné sous forme de biscuit friable, puisqu'il peut diminuer la cohésion des particules aux joints de grains et/ou s'opposer à la densification durant la calcination. Les essais ont montré qu'effectivement, il était possible d'agir pour limiter le frittage des particules primaires de ferrite entre elles lors de la calcination, et ainsi pour diminuer les forces de cohésion des agglomérats de particules primaires.

Comme cela sera précisé ensuite, les conditions de calcination du mélange broyé ne sont pas quelconques et elles peuvent aussi être choisies avantageusement pour permettre la réalisation des buts de l'invention.

Seule la combinaison de tous ces moyens permet de résoudre le problème posé et d'atteindre les objectifs de l'invention, à savoir essentiellement d'une part une diminution des coûts de production et d'investissement, notamment par la diminution des moyens et temps de broyage, d'autre part une amélioration des propriétés magnétiques par la possibilité nouvelle d'obtenir une poudre de ferrite plus homogène avec moins d'agrégats de particules primaires, et enfin la possibilité de piloter plus finement le procédé de fabrication en intervenant sur la granulométrie des matières premières directement en amont de l'étape de calcination, et non en aval comme dans la méthode classique.

En outre, il est à noter que la forte diminution des temps et moyens de broyage ou désagglomération après calcination permet de diminuer fortement, dans les poudres de ferrite, la teneur en Fe²⁺ résultant du broyage avec des billes de fer ou d'acier selon le procédé traditionnel.

### DESCRIPTION DETAILLEE DE L'INVENTION

Selon l'invention, on peut incorporer comme ACM audit mélange un additif permettant le transport de Fe³⁺ en phase gazeuse, durant la phase de calcination, typiquement FeCl₃, typiquement à une teneur comprise entre 0,1 et 0,5 % en poids du mélange. Cet additif est un ACM qui agit sur la densification. Selon une hypothèse de la demanderesse, cet additif tendrait à rendre inactifs les sites les plus actifs (bords aigus) et ainsi à s'opposer à la densification du matériau ferrite obtenu lors de la calcination.

La demanderesse a également trouvé avantageux, pour obtenir après calcination un biscuit friable, d'incorporer comme ACM audit mélange, typiquement à une teneur comprise entre 0,1 et 0,5% en poids du mélange, un oxyde volatil susceptible de se substituer à Fe₂O₃ ou à A, durant ladite calcination, typiquement Bi₂O₃ ou V₂O₅, ou tout autre oxyde volatil, l'incorporation dudit oxyde volatil étant compensée, en cas d'excès de charge, par une autre addition d'un métal bivalent se substituant au Fe³⁺ pour assurer l'équilibre des valences.

Selon l'invention, on peut calciner ledit mélange en deux étapes :
- à une température T₁ supérieure à 1225°C pendant moins de 5 min,
- puis à une température T₂ inférieure à 1150°C pendant au moins 30 min.

Comme observé par la demanderesse, une calcination pendant une durée courte est favorable pour avoir un biscuit friable mais cela exige un mélange " parfait " à l'échelle de chaque granulé afin de limiter le risque d'avoir une réaction incomplète ou des particules d'hexaferrite insuffisamment cristallisées, de sorte que l'anisotropie du cristal ne serait pas suffisamment développée.

Selon une hypothèse émise par la demanderesse, avec un étape de calcination en deux temps selon l'invention, le 2^{ème} phase liquide éventuellement présente en faible quantité, se formerait au-dessus de la température T₁ et se répandrait sur les particules de Fe₂O₃, en un temps très court, puis, à plus basse T₂, la 2^{ème} phase liquide s'étant solidifiée, la réaction ainsi que la cristallisation pourrait se poursuivre sans modification de la taille particulaire, ni renforcement des joints de grains.

Mais on peut aussi opérer en une seule étape, à une température allant de 1200° C à 1300°, et de préférence à une température allant de 1220 à 1250°C, pendant un temps pouvant aller de 30 à 90 min.

Selon l'invention, ledit broyage peut être constitué d'un broyage à sec ou comprendre un broyage en phase humide, le broyage à sec ou humide étant réalisé en présence d'éléments de broyage métallique ou céramique, typiquement des barres ou des billes chargées ou constituées de ZrO₂ ou carbure de tungstène WC, les faibles teneurs de Zr ou W, typiquement de 0,05 à 0,5% en poids dudit mélange, transférées par usure et frottement desdites barres ou billes audit mélange, ou ajoutées audit mélange, agissant, sous forme finement dispersée, comme agent de ACM.

C'est là un effet surprenant observé par la demanderesse : il semblerait que le Zr ou le tungstène W contrecarre le transport de matière d'un grain à un autre, et diminue donc les risques de frittage. La présence d'un ACM permet aussi de s'affranchir d'un écart de composition par rapport à la stoechiométrie, et rend le procédé plus robuste en tolérant un peu de 2^{ème} phase liquide lorsque le rapport n est compris par exemple entre 5,8 et 6. Typiquement, un premier broyage à sec est suivi d'un broyage dans un broyeur à billes, puis, après élimination partielle de l'eau, typiquement par filtration, on met en forme les de gâteaux de filtration pour passage au four de calcination.

Selon une autre modalité de l'invention, on peut approvisionner un oxyde de fer Fe₂O₃ ayant une taille particulaire moyenne comprise entre 0,25 et 1 µm et dans ce cas, ledit broyage de l'étape 2) est supprimé ou remplacé par un mélange à sec ou une dispersion en phase humide.

En effet, en ce qui concerne la question de la taille particulaire, l'important est la distribution finale du mélange avant calcination et la disparition des agrégats de particules, quel que soit le moyen utilisé pour l'obtenir, que la réduction de taille particulaire des particules d'oxyde ferrique soit réalisée dans le cadre du procédé selon l'invention ou en amont de l'approvisionnement en oxyde ferrique.

Le rapport n peut être pris égal à 6 +/- 0,1. Dans ce cas, très peu de 2^{ème} phase liquide se forme, l'excès en composé A étant minime, ce qui est favorable à la formation d'un biscuit poreux et friable. Cependant, plus n est proche de la valeur théorique de 6, et plus le mélange doit être homogène à un niveau de volume très petit, puisque les constituants de la réaction de formation du ferrite doivent être présents localement. Les essais de la demanderesse ont justement montré que l'incorporation d'une étape de broyage préalablement à celle de calcination constituait un des moyens permettant justement d'atteindre ce résultat, résultat qui semblait par ailleurs inaccessible à l'homme du métier.

Le rapport n peut aussi être pris égal à 5.9 +/- 0 .1 et dans ce cas, on peut incorporer en outre audit mélange un agent de contrôle de la taille particulaire (ACTP en abrégé), typiquement de la silice, un dérivé de la silice, ou une combinaison de silice et de chaux, typiquement CaSiO₃, avec une teneur en équivalent silice comprise entre 0,1 et 1% en poids dudit mélange.

En effet, la demanderesse a observé que plus la composition dudit mélange s'écarte de la valeur de n = 6, plus il est avantageux d'introduire un ACTP, de manière à ce que la phase de calcination n'altère pas de manière significative la distribution de taille particulaire des particules primaires obtenue à l'issue du broyage.

Selon une autre modalité de procédé de l'invention, on peut choisir le rapport n = 5,85 +/- 0,15 et comme indiqué précédemment, il est également avantageux dans ce cas d'incorporer un ACTP, en quantité plus grande que dans le cas précédent.

Selon la valeur du rapport n, il se formera plus ou moins de 2^{ème} phase liquide, et il conviendra donc d'en contrecarrer la présence, que ce soit par la nature ou la teneur de l'ACTP ou les conditions de calcination proprement dites.

Toutefois, il importe que les quantités d'ACM et d'ACTP soient limitées, les quantités d'ACM (ou l'élément métal ou métalloïde correspondant restant après calcination) étant de préférence inférieures à 1 % en poids dans le biscuit calciné, et celles d'ACTP (ou l'élément métal ou métalloïde correspondant restant après calcination) étant de préférence inférieures à 2 % en poids dans le biscuit calciné.

Selon l'invention, on peut incorporer audit mélange des produits trivalents B de substitution de A choisis parmi Bi, La et terres rares, typiquement sous forme d'oxydes, et des produits bivalents C de substitution de Fe³⁺ choisis parmi Ni, Co, Mg, Cd, Cu, Zn, de manière à équilibrer les valences, à une teneur choisie pour former des ferrites de formule A₁₋ₓ Bₓ Cₓ Fe₁₂₋ₓ O₁₉, avec x allant typiquement de 0,05 à 0,45.

Comme cela est connu en soi, pour que l'incorporation d'un produit B³⁺ se substituant à un produit A²⁺ dans le réseau cristallin soit possible, il faut notamment que la charge en excès soit compensée par incorporation au réseau cristallin d'ions²⁺ du type Ni²⁺, Zn²⁺, Mn²⁺, Co²⁺, etc... qui se substituent aux ions Fe³⁺.

Par ailleurs, la demanderesse a observé l'action positive qu'à faible teneur, les produits B de substitution de A, particulièrement La, présentaient un effet d'ACM. Par faible teneur, on entend un pourcentage pondéral inférieur à 1%, ou une teneur qui correspondrait à x inférieur à 0,01 dans la formule A₁₋ₓ Bₓ Cₓ Fe₁₂₋ₓ O₁₉. Mais, dans ce cas, selon la demanderesse, du moins après refroidissement, le produit B ne serait pas intégré au réseau cristallin mais se concentrerait aux joints de grains, d'où une action possible comme ACM.

Un autre objet de l'invention est constitué par le biscuit d'hexaferrite obtenu par le procédé selon l'invention, qui présente une densité apparente inférieure à 3 et dont les particules primaires ont une taille particulaire moyenne comprise entre 0,25 et 1 µm. La densité apparente est celle obtenue à partir de la masse correspondant à un volume macroscopique donné.

Un autre objet de l'invention est la poudre fine d'hexaferrite obtenue par désagglomération du biscuit d'hexaferrite obtenu selon l'invention.

Un autre objet de l'invention est constitué par les aimants obtenus à partir la poudre fine d'hexaferrite obtenue selon l'invention.

Un autre objet est constitué par les supports d'enregistrement magnétiques obtenus à partir de poudre obtenue selon l'invention.

### EXEMPLES DE REALISATION

Dans tous les essais, essais selon l'invention ou essais comparatifs hors invention, on a fabriqué des biscuits et poudres fines de ferrite et effectué des mesures selon les conditions suivantes communes à tous les essais :
A) Les matières premières :
   - la poudre de Fe₂O₃ est une poudre obtenue par le procédé Ruthner et de taille particulaire moyenne de 0,8 µm (test Fisher)
   - la poudre de SrCO₃ (composé de A de l'invention) est une poudre de taille particulaire moyenne de 1,5 µm (fournisseur : Solvay, grade A).
   - lorsqu'un ACTP a été utilisé, on a utilisé CaSiO₃.
B) Le broyage effectué avant la calcination selon l'invention a été conduit durant le temps nécessaire pour avoir une taille particulaire moyenne de 0,6 µm (test Fisher).
   Le broyage a été effectué en phase humide (sauf à l'essai 10 effectué à sec) avec des billes de broyage. Le tableau des essais indique le diamètre et la nature des billes.
   Pour l'ensemble des essais 1 à 15, la durée du broyage permettant d'atteindre la taille particulaire de 0,6 µm et le niveau d'homogénéité souhaité était typiquement comprise entre 1 et 2 heures.
   Dans les conditions de broyage des essais (essais 1 à 15), on a constaté que le test selon l'invention relatif au degré d'homogénéité du mélange était satisfait avant que la taille particulaire de 0,6 µm soit atteinte.
C) L'agent contrôleur de microstructure ACM a été indiqué, en nature et teneur, sur le tableau des essais. Dans de nombreux cas, on a utilisé des média ou éléments de broyage constitués ou comprenant ledit ACM, de sorte que, par abrasion normale, une faible quantité d'ACM a été déposée à la surface des cristaux de ferrite.
D) La calcination : elle a été réalisée sous air dans un four à gaz (teneur en O₂ de 9%) à une température T_{C} spécifiée dans le tableau des essais, et pendant 1 heure sauf indication contraire.
E) La transformation d'un ferrite calciné en poudre fine de ferrite utilisable pour former des aimants : on a broyé le ferrite calciné dans un broyeur de laboratoire de type Attritor (R) fonctionnant en continu pendant le temps nécessaire pour obtenir une surface spécifique BET de 10 m²/g. Ce temps figure comme une mesure de la friabilité dans le tableau des résultats.
   En fait, dans le procédé selon l'état de la technique, cette transformation est un broyage avec réduction de la taille particulaire des particules de ferrite, effectué avec des billes de fer pendant un temps spécifié, alors que selon le procédé de l'invention, cette transformation est d'abord une désagglomération du biscuit friable obtenu, qui conduit donc à une teneur en fines relativement faible.
F) Les mesures effectuées :
   - la densité apparente dₐ a été mesurée au porosimètre à billes de silice : les billes de silice ne rentrant pas dans les pores du biscuit, on mesure une densité enveloppe.
   - comme indiqué ci-dessus, la friabilité F du biscuit a été évaluée par un test de broyage : on a mesuré le temps (h) nécessaire pour obtenir une granulométrie BET de 10 m²/g en broyant le ferrite calciné dans un broyeur de laboratoire de type Attritor (R) fonctionnant en continu.
   - l'aimantation spécifique Ms (A.m²/kg) a été mesurée sous un champ de 2 Tesla, par la méthode d'extraction en champ nul . Elle permet d'évaluer la quantité de phase M, c'est-à-dire le rendement de la transformation des matières premières en M.
   - la valeur du champ coercitif HcJ des ferrites sous forme de biscuits obtenus après calcination a été mesurée au coercimètre ; elle permet de se faire une idée de la finesse des grains dans le biscuit : plus HcJ est élevé et plus les grains sont fins.
   - la teneur en Fe²⁺, Cl et Zr, W ont été obtenues par les méthodes de mesure de chimie humide, et celle en Bi, La, Co, Zn par fluorescence X.
   - les valeurs de la rémanence Br et du champ coercitif HcJ d'aimants fabriqués à partir de poudre fine de ferrite ont été mesurées selon la norme IEC 404-5, les aimants ayant la forme d'un cylindre (phi = 30 mm et e = 8 mm), obtenu par compression de la pâte à BET = 10 m²/g, sous une pression P = 30 MPa (300 kg/cm²) et sous un champ axial de 1 Tesla, suivi d'un frittage électrique sous air à 1235°C pendant un temps de palier de 1 heure à cette température.
   - l'indice IP est un indice de performance calculé par la formule " IP = Br + 0,5.HcJ en unités SI", qui permet de comparer les résultats entre eux. indépendamment de la balance entre Br et HcJ, qui est gouvernée tant par les additifs que par les conditions de calcination.

### TABLEAU DES ESSAIS :

| N° essai | n | autres composants % en poids | ACTP (% p.) | Broyage (Inv.) média / taille | T_{C} °C | Broyage (EdT) média / taille | ACM (%p.) |
|---|---|---|---|---|---|---|---|
| A | 5,55 | | 1 | - | 1290 | billes fer / 4 mm | - |
| B | 6,0 | La₂O₃=5,2% | - | - | 1230 | billes fer / 4 mm | - |
| | | Co₃O₄=2,3% | | | | | |
| C | 6,0 - - | La₂O₃= 5,2% | - | - | 1230 | billes fer / 4 mm | - |
| | | ZnO=2,3% | | | | | |
| 1 | 5,85 | - | 1 | billes WC/4mm | 1230 | - | W |
| | | | | | | | 0,1 |
| 2 | 5,85 | - | - | billes ZrO₂/4mm | 1250-3min | - | Zr |
| | | | | | 1140-60min | | 0,4 |
| 3 | 5,85 | - | 1 | billes Fer / 4mm | 1240 | - | - |
| 4 | 6,0 | - | - | billes ZrO₂/4mm | 1230 | - | Zr |
| | | | | | | | 0,4 |
| 5 | 5,85 | - | - | billes Fer /4mm | 1250-3min | - | - |
| | | | | | 1140-60min | - | |
| 6 | 5,90 | - | 1 | billes ZrO₂/4mm | 1230 | - | Zr |
| | | | | | | | 0,4 |
| 7 | 5,55 | - | 2 | billes Fer /4mm | 1230 | - | - |
| 8 | 5,85 | - | - | billes ZrO₂/4mm | 1230 | - | FeCl₃/ZrO₂ |
| | | | | | | | 0,4 / 0,4 |
| 9 | 6,0 | - | - | billes Fer /4mm | 1250 | - | - |
| 10 | 5,85 | - | 1 | billes ZrO₂/20mm | 1230 | - | Zr |
| | | | | broyage à sec | | | 0,4 |
| 11 | 6,10 | - | | - billes ZrO₂/4mm | 1230 - | - | Bi₂O₃/Zr |
| | | | | | | | 0,4 / 0,4 |
| 12 | 5,95 | - | - | billes Fe /4mm | 1290 | - | - |
| 13 | 5,85 | - | 1 | billes Fe /20mm | 1130 | - | - |
| | | | | broyage à sec | | | |
| 14 | 6,0 | La₂O₃=5,2% | - | billes ZrO₂/4mm | 1230 | - | Zr |
| | | Co₃O₄=2,3% | | | | | 0,2 |
| 15 | 6,0 | La₂O₃=5,2% | - | billes ZrO₂/4mm | 1230 | - | Zr |
| | | ZnO=2,3% | | | | | 0,2 |

Remarques :
- ACM et ACTP sont exprimés en % pondéral du mélange (non calciné).
- aux essais B et 14, la teneur pondérale en La et Co dans le biscuit calciné sont respectivement de 3,9 % et 1,6%
- aux essais C et 15, la teneur pondérale en La et Zn dans le biscuit calciné sont respectivement de 3,9 % et 1,7%

### RESULTATS OBTENUS:

| N° essai (mT) | dₐ | Friabilité F (h) | Ms Am²/kg | HcJ kA/m | Porosité % | Fe²⁺ | Propriétés des aimants % | Br (mT) | HcJ(kA/m) IP |
|---|---|---|---|---|---|---|---|---|---|
| A | 4,32 | 20 | 68,1 | 272 | 16 | 2,7 | 410 | 270 | 545 |
| B | 4,14 | 22 | 68,4 | 375 | 22 | 2,6 | 412 | 346 | 585 |
| C | 4,12 | 21 | 69,5 | 252 | 21 | 2,3 | 421 | 192 | 517 |
| 1 | 2,72 | 14 | 68,1 | 332 | 43 | 0,3 | 418 | 293 | 564 |
| 2 | 2,72 | 14 | 68,1 | 332 | 44 | 0,1 | 420 | 292 | 566 |
| 3 | 2,72 | 32 | 68,1 | 332 | 44 | 0,1 | 401 | 188 | 495 |
| 4 | 2,65 | 13 | 68,4 | 330 | 48 | 0,3 | 420 | 296 | 568 |
| 5 | 2,20 | 6 | 59,1 | 253 | 55 | 0,1 | 382 | 193 | 479 |
| 6 | 2,80 | 14 | 68,3 | 331 | 45 | 0,3 | 418 | 293 | 564 |
| 7 | 2,30 | 8 | 64,1 | 350 | 55 | 0,2 | 385 | 210 | 490 |
| 8 | 2,68 | 14 | 68,4 | 342 | 47 | 0.3 | 419 | 290 | 564 |
| 9 | 3,48 | 18 | 66,9 | 285 | 32 | 1,3 | 420 | 210 | 525 |
| 10 | 2,72 | 15 | 68,1 | 332 | 43 | 0,3 | 419 | 294 | 566 |
| 11 | 2,70 | 13 | 68,2 | 325 | 47 | 0,3 | 420 | 298 | 569 |
| 12 | 4,10 | 21 | 68,1 | 265 | 19 | 0,3 | 405 | 268 | 539 |
| 13 | 2,3 | 6 | 57,6 | 355 | 55 | 0,1 | 378 | 200 | 478 |
| 14 | 2,73 | 12 | 68,5 | 395 | 48 | 0,3 | 421 | 362 | 602 |
| 15 | 2,84 | 12 | 69,2 | 231 | 46 | 0,3 | 432 | 182 | 523 |

Les essais 3, 5, 7, 9, 12 et 13 sont des essais comparatifs réalisés dans le cadre de l'invention, mais ils n'appartiennent pas à l'invention car il leur manque au moins un des moyens essentiels de l'invention.

### Conclusions de ces essais :

D'une part, on constate un gain important du temps global de broyage ou déasgglomération entre l'invention et l'état de la technique. En effet, dans le cadre des essais réalisés, à un temps moyen de broyage de l'ordre de 22 h selon l'état de la technique correspond un temps moyen de 2 h de broyage plus 14 h de désagglomération du biscuit, soit environ un total de 16 h, ce qui, même en tenant compte des transferts de produit, assure un gain de productivité d'au moins 10%, gain très important pour un processus industriel.

D'autre part, ces essais montrent une amélioration des performances, des propriétés magnétiques des aimants obtenus avec les poudres fines de ferrite selon l'invention.

### AVANTAGES DE L'INVENTION

Parmi les avantages de l'invention autres que ceux qui correspondent à la résolution du problème posé, il convient de souligner en particulier deux points importants :
- d'une part, le procédé selon l'invention permet d'éliminer la présence de fines dans la poudre de ferrite, les fines étant toutes les particules de taille inférieure à la taille minimum requise de 0,3 µm.
   En effet. les fines obtenues dans les poudres de l'état de la technique résultent du broyage postérieur à la calcination, et de la difficulté, sinon l'impossibilité de séparer les fines des particules de ferrite.
   Au contraire, avec le procédé de l'invention, les fines particules de Fe₂O₃, qui ont pu se former durant le broyage antérieur à la calcination, ont nécessairement disparu durant la calcination compte tenu de leur plus grande réactivité.
- d'autre part, le procédé selon l'invention permet de limiter la teneur en ion Fe²⁺ à une valeur basse, cet ion ayant une incidence négative sur les propriétés magnétiques finales. Par contre, avec le broyage selon l'état de la technique, typiquement un broyage avec
   des billes de fer ou d'acier, la teneur en ion Fe²⁺ de la poudre de ferrite est beaucoup plus élevée , et typiquement deux fois plus élevée, ce qui améliore notablement les propriétés magnétiques finales, notamment IP. L'amélioration sur IP est évaluée à + 20 mT sur les ferrites de Sr non substitués, à également + 20 mT sur les ferrites substitués au La et Co, et à + 6 mT sur les ferrites substitués au La et Zn.

## Revendications

1. Procédé de fabrication de poudres ou biscuits d'hexaferrites de type M, de formule A Fe₁₂ O₁₉ où A désigne un métal choisi parmi Ba, Sr, Ca, Pb, ou leur mélange dans lequel :
a) on approvisionne un oxyde de fer Fe₂O₃ et un carbonate de A, typiquement sous forme de poudres, et on fait un mélange dudit oxyde de fer et dudit carbonate de A, avec un rapport molaire n = Fe₂O₃ /AO,
b) on met en forme ledit mélange sous forme d'agglomérats de forme et de taille adaptées à la phase de calcination, et on les calcine dans un four, typiquement entre 1100°C et 1300°C, de manière à former le ferrite de type M,
c) on broie lesdits agglomérats calcinés pour obtenir une poudre fine de ferrite,
**caractérisé en ce que**,
- à l'étape a) antérieure à ladite calcination :
1) on forme ledit mélange avec un rapport n compris entre 5,7 et 6,1,
2) simultanément à la formation dudit mélange ou postérieurement à celle-ci, on broie ledit mélange, de manière à avoir à la fois un mélange présentant un degré d'homogénéité au moins égal à un seuil prédéterminé, et une taille particulaire moyenne de valeur prédéterminée comprise entre 0,25 et 1 µm,
3) on introduit dans ledit mélange, avant ou pendant ledit broyage un agent contrôleur de la microstructure ou ACM en abrégé,
- à l'étape b), les conditions de calcination ainsi que la nature et la teneur en ACM sont choisies pour obtenir, à l'issue de la phase de calcination, un matériau ferrite sous forme d'un biscuit poreux présentant simultanément le propriétés suivantes :
* un rendement de transformation en ferrite M cristallisé supérieur à 95%,
* une densité apparente dₐ inférieure à 3,5 , et, de préférence inférieure à 3, ou une porosité supérieure à 30% et de préférence supérieure à 40%,
* une faible énergie de cohésion aux joints de grains entre particules primaires conduisant à une friabilité élevée, de manière à pouvoir remplacer, le broyage de l'étape c) par une simple désagglomération dudit biscuit,
- à l'étape c), le broyage est limité à une désagglomération.

2. Procédé selon la revendication 1 dans lequel on incorpore comme ACM audit mélange un additif permettant le transport de Fe³⁺ en phase gazeuse, durant la phase de calcination, typiquement FeCl₃, typiquement à une teneur comprise entre 0,1 et 0,5 % en poids du mélange.

3. Procédé selon une quelconque des revendications 1 à 2 dans lequel on incorpore comme ACM audit mélange, typiquement à une teneur comprise entre 0,1 et 0,5% en poids du mélange, un oxyde volatil susceptible de se substituer à Fe₂O₃ ou à A, durant ladite calcination, typiquement Bi₂O₃ ou V₂O₅, l'incorporation dudit oxyde volatil étant compensée, en cas d'excès de charge, par une autre addition d'un métal bivalent se substituant au Fe³⁺ pour assurer l'équilibre des valences.

4. Procédé selon une quelconque des revendications 1 à 3 dans lequel on calcine ledit mélange :
- soit en deux étapes : à une température comprise entre 1225°C et 1275°C pendant moins de 5 min, puis à une température comprise entre 1100 et 1150°C pendant au moins 30 min,
- soit en une étape à une température comprise entre 1200°C et 1300°C, pendant un temps compris entre 30 et 90 min.

5. Procédé selon une quelconque des revendications 1 à 4 dans lequel ledit broyage est constitué d'un broyage à sec ou comprend un broyage en phase humide, le broyage à sec ou humide étant réalisé en présence d'éléments de broyage métallique ou céramique, typiquement des barres ou des billes chargées ou constituées de ZrO₂ ou carbure de tungstène WC, les faibles teneurs de Zr ou W, typiquement de 0,05 à 0,5% en poids dudit mélange, transférées par usure et frottement desdites barres ou billes audit mélange, ou ajoutées audit mélange, agissant, sous forme finement dispersée, comme agent de ACM.

6. Procédé selon une quelconque des revendications 1 à 4 dans lequel on approvisionne un oxyde de fer Fe₂O₃ ayant une taille particulaire moyenne comprise entre 0,25 et 1 µm et dans lequel ledit broyage de l'étape 2) est supprimé ou remplacé par un mélange à sec ou une dispersion en phase humide.

7. Procédé selon une quelconque des revendications 1 6 dans lequel on incorpore en outre audit mélange un agent de contrôle de la taille particulaire ou ACTP en abrégé, typiquement de la silice, de la chaux, un dérivé de la silice, ou une combinaison de silice et de chaux, typiquement CaSiO₃, avec une teneur en équivalent silice comprise entre 0,1 et 1% en poids dudit mélange.

8. Procédé selon une quelconque des revendications 1 à 7 dans lequel le rapport n est égal à 6 +/- 0,1.

9. Procédé selon une quelconque des revendications 1 à 7 dans lequel le rapport n est choisi égal à 5,9 +/- 0,1.

10. Procédé selon une quelconque des revendications 1 à 7 dans lequel le rapport n est choisi égal à 5,85 +/- 0,15.

11. Procédé de fabrication de ferrites de formule A₁₋ₓ Bₓ Cₓ Fe₁₂₋ₓ O₁₉, où
- A désigne un métal choisi parmi Ba, Sr, Ca, Pb ou leur mélange,
- B désigne un produit trivalent de substitution de A,
- C désigne un produit bivalent de substitution de Fe³⁺,
dans lequel on met en oeuvre le procédé selon une quelconque des revendications 1 à 10, et dans lequel à l'étape a) on incorpore audit mélange (i) des produits B choisis parmi Bi, La et terres rares, typiquement sous forme d'oxydes, et (ii) des produits C choisis parmi Ni, Co, Mg, Cd, Cu, Zn, de manière à équilibrer les valences, à une teneur choisie pour former des ferrites de formule A₁₋ₓ Bₓ Cₓ Fe₁₂₋ₓ O₁₉ avec x allant de 0,05 à 0,45.

12. Biscuit d'hexaferrite ayant une densité apparente inférieure à 3 et une taille particulaire moyenne comprise entre 0,25 et 1 µm, obtenu par le procédé selon une quelconque des revendications 1 à 11.

13. Poudre fine d'hexaferrite obtenue par désagglomération du biscuit de la revendication 12.

14. Aimants obtenus à partir de poudre selon la revendication 13.

15. Supports magnétiques d'enregistrement obtenus à partir de poudre selon la revendication 13.

## Patentansprüche

1. Verfahren zur Herstellung von Pulvern oder Kuchen aus Hexaferriten vom Typ M mit der Formel A Fe₁₂ O₁₉, worin A ein unter Ba, Sr, Ca, Pb oder deren Gemischen gewähltes Metall bezeichnet, bei dem:
a) ein Eisenoxid Fe₂O₃ und ein Carbonat von A typischerweise in Form von Pulvern bereitgestellt werden und ein Gemisch aus dem Eisenoxid und dem Carbonat von A mit einem Molverhältnis n = Fe₂O₃ / AO hergestellt wird,
b) das Gemisch zu Agglomeraten geformt wird, deren Form und Größe für die Calcinierungsphase geeignet sind und die in einem Ofen bei typischerweise 1100°C bis 1300°C calciniert werden, um das Ferrit vom Typ M zu bilden,
c) die calcinierten Agglomerate gemahlen werden, um feines Ferritpulver zu erhalten,
**dadurch gekennzeichnet, dass**
- im Schritt a) vor der Calcinierung
1) das Gemisch mit einem Verhältnis n von 5,7 bis 6,1 hergestellt wird,
2) das Gemisch bei oder nach seiner Herstellung gemahlen wird, um ein Gemisch zu erhalten, dessen Homogenitätsgrad mindestens einem vorbestimmten Grenzwert entspricht und das eine durchschnittliche Teilchengröße von 0,25 bis 1 µm aufweist,
3) in das Gemisch vor oder während der Mahlung ein Mittel zur Kontrolle des Mikrogefüges oder abgekürzt ACM eingebracht wird,
- im Schritt b) die Calcinierungsbedingungen sowie die Art und der Gehalt an ACM so gewählt werden, dass nach der Calcinierungsphase ein Ferritwerkstoff in Form eines porösen Kuchens vorliegt, der folgende Eigenschaften gleichzeitig aufweist:
* einen Wirkungsgrad der Umwandlung in kristallisiertes M-Ferrit > 95 %,
* eine Scheindichte dₐ < 3,5 und vorzugsweise < 3 oder eine Porosität > 30 % und vorzugsweise > 40 %,
* eine geringe Kohäsionsenergie an den Komgrenzen zwischen Primärteilchen, die zu einer hohen Bröckligkeit führt, so dass die Mahlung aus Schritt c) durch eine einfache Desagglomeration des Kuchens ersetzt werden kann,
- im Schritt c) die Mahlung auf eine Desagglomeration beschränkt ist.

2. Verfahren nach Anspruch 1, bei dem dem Gemisch als ACM ein Additiv beigemengt wird, das während der Calcinierungsphase den Transport von Fe³⁺ in der Gasphase ermöglicht, typischerweise FeCl₃ mit einem Anteil von 0,1 bis 0,5 % an der Masse des Gemisches.

3. Verfahren nach irgendeinem der Ansprüche 1 bis 2, bei dem dem Gemisch als ACM, typischerweise mit einem Anteil von 0,1 bis 0,5 % an der Masse des Gemisches, ein leicht flüchtiges Oxid beigemengt wird, das während der Calcinierung an die Stelle von Fe₂O₃ oder A treten kann, typischerweise Bi₂O₃ oder V₂O₅, wobei die Beimengung dieses leicht flüchtigen Oxids im Falle von Überladung durch eine weitere Zugabe eines an die Stelle von Fe³⁺ tretenden zweiwertigen Metalls kompensiert wird, um das Gleichgewicht der Wertigkeiten sicherzustellen.

4. Verfahren nach irgendeinem der Ansprüche 1 bis 3, bei dem das Gemisch calciniert wird:
- entweder in zwei Schritten, nämlich bei einer Temperatur von 1225°C bis 1275°C während weniger als 5 min und dann bei einer Temperatur von 1100 bis 1150°C während mindestens 30 min,
- oder in einem Schritt bei einer Temperatur von 1200°C bis 1300°C während einer Dauer von 30 bis 90 min.

5. Verfahren nach irgendeinem der Ansprüche 1 bis 4, bei dem die Mahlung aus einer Trockenmahlung besteht oder eine Nassmahlung beinhaltet, welche Trocken- oder Nassmahlung in Anwesenheit von metallischen oder keramischen Mahlelementen erfolgt, typischerweise Stäben oder Kugeln, die ZrO₂ oder Wolframkarbid WC enthalten oder daraus bestehen, wobei die geringen Zr- oder W-Anteile, typischerweise 0,05 bis 0,5 % an der Masse des Gemisches, welche durch Abnutzung oder Reibung der Stäbe oder Kugeln an das Gemisch übertragen oder dem Gemisch zugegeben werden, in feinstverteilter Form als ACM-Mittel wirken.

6. Verfahren nach irgendeinem der Ansprüche 1 bis 5, bei dem ein Eisenoxid Fe₂O₃ mit einer mittleren Teilchengröße von 0,25 bis 1 µm bereitgestellt wird und bei dem die Mahlung aus Schritt 2) entfällt oder durch eine Trockenmahlung oder eine Dispersion in der Nassphase ersetzt wird.

7. Verfahren nach irgendeinem der Ansprüche 1 bis 6, bei dem dem Gemisch zusätzlich ein Mittel zur Kontrolle der Teilchengröße oder abgekürzt ACTP beigemengt wird, typischerweise Kieselsäure, Kalk, ein Kieselsäurederivat oder eine Kombination aus Kieselsäure und Kalk, typischerweise CaSiO₃, mit einem Anteil des Kieselsäureäquivalents von 0,1 bis 1 % an der Masse des Gemisches.

8. Verfahren nach irgendeinem der Ansprüche 1 bis 7, bei dem das Verhältnis n gleich 6 +/- 0,1 ist.

9. Verfahren nach irgendeinem der Ansprüche 1 bis 7, bei dem das Verhältnis n gleich 5,9 +/- 0,1 gewählt wird.

10. Verfahren nach irgendeinem der Ansprüche 1 bis 7, bei dem das Verhältnis n gleich 5,85 +/- 0,15 gewählt wird.

11. Verfahren zur Herstellung von Ferriten mit der Formel A₁₋ₓ Bₓ Cₓ Fe₁₂₋ₓ O₁₉, worin
- A ein unter Ba, Sr, Ca, Pb oder deren Gemisch gewähltes Metall bezeichnet,
- B einen dreiwertigen Stoff zur Substitution von A bezeichnet,
- C einen zweiwertigen Stoff zur Substitution von Fe³⁺ bezeichnet,
bei dem das Verfahren nach irgendeinem der Ansprüche 1 bis 10 durchgeführt wird und bei dem im Schritt a) dem Gemisch (i) Stoffe B, gewählt unter Bi, La und Seltenen Erden, typischerweise in Form von Oxiden, und (ii) Stoffe C, gewählt unter Ni, Co, Mg, Cd, Cu, Zn, zum Ausgleich der Wertigkeiten mit einem solchen Gehalt beigemengt werden, dass Ferrite mit der Formel A₁₋ₓ Bₓ Cₓ Fe₁₂₋ₓ O₁₉ gebildet werden, wobei x von 0,05 bis 0,45 reicht.

12. Kuchen aus Hexaferrit mit einer Scheindichte < 3 und einer mittleren Teilchengröße zwischen 0,25 und 1 µm, hergestellt durch das Verfahren nach einem der Ansprüche 1 bis 11.

13. Feinpulver aus Hexaferrit, hergestellt durch Desagglomeration des Kuchens aus Anspruch 12.

14. Magnete, hergestellt aus Pulver nach Anspruch 13.

15. Magnetische Aufzeichnungsträger, hergestellt aus Pulver nach Anspruch 13.

## Claims

1. Manufacturing method for M type hexaferrite powders or cakes of formula A Fe₁₂O₁₉ where A designates a metal chosen among Ba, Sr, Ca, Pb, or their mixture wherein:
a) an iron oxide Fe₂O₃ and an A carbonate are provided, typically under the form of powders, and a mixture is made of said iron oxide and said A carbonate, with a molar ratio n=Fe₂O₃/AO,
b) said mixture is shaped in the form of agglomerates of shape and size adapted to the calcination stage, and these are calcinated in an oven, typically between 1100°C and 1300°C, in such a way as to form M type ferrite,
c) said calcinated agglomerates are ground to obtain a fine ferrite powder, **characterised in that**
- at the previous stage a) of said calcination:
1) said mixture is formed with a ratio n comprised between 5.7 and 6.1,
2) simultaneously with the formation of said mixture or after this, said mixture is ground, so as to have both a mixture with a degree of homogeneity at least equal to a predetermined threshold, and an average particle size of predetermined value comprised between 0.25 and 1 µm,
3) before or during said grinding, one introduces into said mixture an agent for controlling the microstructure (ACM),
- at stage b), the calcination conditions together with the nature and content in ACM are chosen in order to obtain, at the end of the calcination phase, a ferrite material under the form of a porous cake presenting at the same time the following properties:
* a transformation yield in crystallised M ferrite greater than 95%,
* an apparent density dₐ lower than 3.5 and, preferably, lower than 3, or a porosity higher than 30% and preferably higher than 40%,
* low cohesion energy at the grain boundaries between primary particles leading to high brittleness, in order to replace the grinding of stage c) by a simple dispersion of said cake,
- at stage c),the grinding is limited to a dispersion.

2. Process according to claim 1 wherein, as ACM, one incorporates into said mixture an additive allowing the transport of Fe³⁺ in gaseous phase, during the calcination phase, typically FeCl₃, typically with a content comprised between 0.1 and 0.5% by weight of mixture.

3. Process according to one or the other of claims 1 and 2, wherein one incorporates into said mixture, as ACM, and typically at a content comprised between 0.1 and 0.5% by weight of mixture, a volatile oxide capable of substituting for Fe₂O₃ or A, during said calcination, typically Bi₂O₃ or V₂O₅, the incorporation of said volatile oxide being compensated, in the case of excess charge, by another addition of a bivalent metal substituting for Fe³⁺ to ensure the valency balance.

4. Process according to any one of claims 1 to 3 wherein said mixture is calcinated:
- either in two stages: at a temperature comprised between 1225°C and 1275°C for less than 5 minutes, then at a temperature comprised between 1100°C and 1150°C for at least 30 minutes,
- or in a single stage at a temperature comprised between 1200°C and 1300°C, for a time comprised between 30 and 90 minutes.

5. Process according to any one of claims 1 to 4 wherein said grinding is constituted of a dry grinding or comprises a humid phase grinding, the dry or humid grinding being carried out in the presence of metallic or ceramic grinding elements, typically bars or balls loaded with or constituted of ZrO₂ or tungsten carbide WC, the low contents of Zr or W, typically between 0.05 and 0.5% by weight of said mixture, transferred by wear and rubbing of said bars or balls to said mixture, or added to said mixture, acting under finely dispersed form as ACM agent.

6. Process according to any one of claims 1 to 4 wherein one provides an iron oxide Fe₂O₃ with an average particle size comprised between 0.25 and 1 µm and in which one replaces said grinding under 2) by a dry mixture or a dispersion in humid phase.

7. Process according to any one of claims 1 to 6 wherein one furthermore incorporates into said mixture a particle size control agent, abbreviated as ACTP, typically silica, calcium oxide, a derivative of silica, or a combination of silica and calcium oxide, typically CaSiO₃, with a content in equivalent silica comprised between 0.1 and 1% by weight of said mixture.

8. Process according to any one of claims 1 to 7 wherein the ratio n is equal to 6 ± 0.1.

9. Process according to any one of claims 1 to 7 wherein the ratio n is chosen equal to 5.9 ± 0.1.

10. Process according to any one of claims 1 to 7 wherein the ratio n is chosen equal to 5.85 ± 0.15.

11. Manufacturing method for ferrites of formula A₁₋ₓBₓCₓFe₁₂O₁₉ where
- A designates a metal chosen among Ba, Sr, Ca, Pb, or their mixture,
- B designates a trivalent substitution product for A,
- C designates a bivalent substitution product for Fe³⁺,
wherein one applies the method according to any one of claims 1 to 10, and wherein at stage a) one incorporates into said mixture (i) products B chosen among Bi, La and rare earths, typically under the form of oxides, and (ii) products C chosen among Ni, Co, Mg, Cd, Cu, Zn, in such a way as to balance the valencies, with a content chosen to form ferrites of formula A₁₋XB_{X}C_{X}Fe_{12-X}O₁₉, with x ranging between 0.05 and 0.45.

12. Hexaferrite cake having an apparent density lower than 3 and an average particle size comprised between 0.25 and 1 µm, obtained by the process according to any one of claims 1 to 11.

13. Hexaferrite fine powder obtained by dispersion of the cake of claim 12.

14. Magnets obtained from powder according to claim 13.

15. Magnetic recording media obtained from powder according to claim 13.
